# EUROPÄISCHE PATENTANMELDUNG

(11) **EP 3 441 042 A1**
(43) Veröffentlichungstag der Anmeldung: **13.02.2019**
(21) Anmeldenummer: 18020344.0
(22) Anmeldetag: 23.07.2018
(51) Int. Cl.: A61C 13/273

(54) **VERBINDUNGSELEMENT ZUR LÖSBAREN BEFESTIGUNG EINES HERAUSNEHMBAREN ZAHNERSATZES AN EINEM FESTSITZENDEN ZAHNERSATZ**

(30) Priorität: 07.08.2017 DE 102017007560
(71) Anmelder: Seitner, Thomas, 73760 Ostfildern (DE)
(72) Erfinder: Seitner, Thomas, 73760 Ostfildern (DE)
(74) Vertreter: Patentanwälte Schuster, Müller & Partner mbB

(57) **Zusammenfassung**

Es werden ein Verbindungselement (1) zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten und ein Verfahren zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten vorgeschlagen, bei denen das Verbindungselement (1) wie ein Steckriegel funktioniert aber wie ein Drehriegel bedient wird.

## Beschreibung

### Stand der Technik

Die Erfindung geht aus von einem Verbindungselement zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, nach der Gattung des Anspruchs 1, und einem Verfahren zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, nach der Gattung des Anspruchs 12.

Im Gegensatz zu einem festsitzenden Zahnersatz, wie z.B. Zahnkronen, Teleskopkronen, Stegen auf natürlichen Zähnen oder Zahnimplantaten, der im Mund verbleibend zu reinigen ist, bietet ein herausnehmbarer Zahnersatz, dass er außerhalb des Mundes leicht zu reinigen ist. Um den herausnehmbaren Zahnersatz, der in der Regel in Richtung der Kaufläche abgenommen wird, im Mund zu befestigen, gibt es unterschiedliche Befestigungssysteme.

Zum einen gehören zum Stand der Technik sogenannte Geschiebe, bei denen der Halt des herausnehmbaren Zahnersatzes durch Friktion (Reibung) erzeugt wird. Nachteilig ist hierbei, dass die Friktion weder zu stark noch zu schwach sein sollte, da eine zu starke Friktion zu einem Verklemmen des Zahnersatzes führt bzw. eine zu schwache Friktion durch zusätzliche Friktionselemente ausgeglichen werden muss.

Zum anderen gehören zum Stand der Technik sogenannte Verriegelungssysteme, bei denen man insbesondere zwischen einer Steckriegel- (Schubriegel-), bei der axial verschiebbare Verriegelungsstifte eingesetzt werden, einer Schwenkriegel- und einer Drehriegel-Befestigung unterscheidet. Derartige Befestigungssysteme werden beispielsweise in dem US-amerikanischen Patent 4,085,506 A, in dem Gebrauchsmuster DE 200 00 709 U1, in der Patentschrift DE 100 00 334 C2 , in der Patentschrift DE 196 36 012 AI, in der Patentschrift DE 198 01 159 C2, in der Patentschrift DE 198 24 386 B4, in der Patentschrift DE 197 28 863 C2, in der Offenlegungsschrift DE 44 25 605 A1, in der Offenlegungsschrift DE 36 11 901 A1, in dem Gebrauchsmuster DE 94 09 140 U1 sowie in der europäischen Patentschrift EP 0 761 179 B1 beschrieben.

In der deutschen Patentschrift DE 35 34 751 C2 wird eine zahnprothetische Verbindungsvorrichtung offenbart, bestehend aus einem auf ein mit einer Pfeilerzahnarmierung fest verbundenem Primärteil, einem dieses formschlüssig übergreifenden, der Prothese zugeordneten Sekundärteil und einem Schubriegel, der durch je eine - in situ - fluchtende Bohrung des Primär- und Sekundärteils fühlbar und verankerbar ist, wobei auf der Innenseite des Sekundärteils eine die Bohrung endseitig fortsetzende Aufnahme zur Halterung und Abstützung für das Ende des Schubriegels und an der gegenüberliegenden Seite der Bohrung in der Zahnprothese eine Einbettung für eine Arretierungs- und Lagerscheibe vorgesehen sind, wobei der Riegel einen seine Drehung in der gemeinsamen Bohrung von Primär- und Sekundärteil verhindernden, nicht rotationssymmetrischen Querschnitt aufweist und dessen Kopf auf bukkaler Seite in verriegeltem Zustand glatt mit der Zahnprothesenaußenseite abschließt. Dabei zeichnet sich der Schubriegel, der in seiner Längsausdehnung ungefähr rechtwinklig oder schräg zur Zahnreihe und ungefähr rechtwinklig zur Abnahmerichtung der Zahnprothese angeordnet ist, dadurch aus, dass er entlang seiner Längsausdehnung zwischen einer Verriegelungsposition und einer Entriegelungsposition (oder auch Freigabeposition genannt) verschiebbar gelagert ist. Um die Zahnprothese abzunehmen, wird der Schubriegel mit einem Fingernagel aus der Verriegelungsposition in die Entriegelungsposition gezogen. Um die Zahnprothese wieder einzusetzen, wird der Schubriegel durch Druck mit der Fingerkuppe in die Verriegelungsposition zurückgeschoben.

Aus dem Gebrauchsmuster DE 298 00 617 U1 ist eine Steckriegel-Vorrichtung zur lösbaren Befestigung eines herausnehmbaren Zahnersatzes an einem festsitzenden Zahnersatz bekannt, die aus einem Verriegelungsstift und einem Aufnahmeelement mit einer Aufnahmebohrung zur Aufnahme des Verriegelungsstiftes besteht, wobei der Verriegelungsstift in der Aufnahmebohrung zwischen einer Verriegelungsposition und einer Entriegelungsposition (Freigabeposition) axial verschiebbar ist. Der Verriegelungsstift ist dabei zwischen der Verriegelungsposition und der Entriegelungsposition durch eine Funktionsvorrichtung in einem geschlossenen, zylindrischen Gehäuse geführt, das seinerseits in den herausnehmbaren Zahnersatz eingesetzt ist. Der festsitzende Zahnersatz weist eine Aufnahme für den Verriegelungsstift auf (sogenannte Matrize), in die der Verriegelungsstift in seiner Verriegelungsposition eintaucht. In der Entriegelungsposition ist der Verriegelungsstift außer Eingriff mit der Aufnahme. Zudem weist die Steckriegel-Vorrichtung eine Sicherungsvorrichtung zur Sicherung des Verriegelungsstiftes in dem Aufnahmeelement gegen ein unbeabsichtigtes Herausbewegen aus der Aufnahmebohrung auf, wobei die Sicherungsvorrichtung ein Innengewinde in der Aufnahmebohrung und ein mit dem Innengewinde in Gewindeeingriff bringbares Aussengewinde an dem Verriegelungsstift aufweist.

Eine Schwenkriegel-Vorrichtung zur lösbaren Befestigung eines Zahnersatzes mit einem schwenkbaren Riegel ist aus der Patentschrift DE 40 29 148 C1 vorbekannt. Der in dieser Vorrichtung verwendete Riegel ist derart ausgebildet, dass er über einen Gelenkstift an dem einen Zahnersatzteil, bei dem es sich gewöhnlich um das Sekundärteil handelt, schwenkbar gelagert ist und in der geschlossenen Stellung in eine Ausnehmung des anderen Zahnersatzteils eingreift, bei dem es sich gewöhnlich um ein fest sitzendes sogenanntes Primärteil handelt.

Aus der Patentschrift DE 34 19 144 C2 ist eine Vorrichtung zum lösbaren Verbinden einer Zahnprothese mit einem am Restgebiß festsitzenden prothetischen Gegenstück bekannt, wobei zur Befestigung der Zahnprothese ein Drehriegel eingesetzt wird, der einen senkrecht zur Zahnachse gelagerten Drehbolzen und einen Betätigungsflügel aufweist, wobei der Drehbolzen eine Ausnehmung aufweist, so dass der Drehbolzen in eine Verriegelungs- und eine Entriegelungsposition drehbar ist.

Nachteilig bei diesen Verriegelungssystemen ist, dass sie in der Regel für deren Bedienung ein manuelles Geschick, welches jedoch nicht bei jedem Anwender vorhanden ist, voraussetzen, einem hohen Verschleiß unterliegen und/oder technisch aufwändig konzipiert und damit teuer sind. Des Weiteren gestaltet sich eine nachträgliche Integration dieser Verriegelungssysteme in bereits bestehenden Zahnersatz als sehr schwierig und technisch aufwändig.

Der Erfindung liegt daher die Aufgabe zugrunde, ein die Nachteile des Standes der Technik überwindendes Verbindungselement zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten und ein die Nachteile des Standes der Technik überwindendes Verfahren zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten bereitzustellen.

### Die Erfindung und ihre Vorteile

Das erfindungsgemäße Verbindungselement zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, mit den Merkmalen des Anspruchs 1, und das erfindungsgemäße Verfahren zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, mit den Merkmalen des Anspruchs 12, haben demgegenüber den Vorteil, dass ein Verbindungselement zur lösbaren Befestigung eines herausnehmbaren Zahnersatzes an einem festsitzenden Zahnersatz eingesetzt wird, dessen Verriegelungsmechanismus dem eines Steckriegels und dessen Betätigungsmechanismus aber dem eines Drehriegels entspricht, wodurch das Verbindungselement wie ein Steckriegel funktioniert aber wie ein Drehriegel bedient wird. Dabei weist das Verbindungselement einen Verriegelungsstift und ein drehbares Teil auf, wobei das drehbare Teil eine oder zwei mit dem Verriegelungsstift zusammenwirkende Steuerschräge(n) aufweist, Die Steuerschräge(n) weist bzw. weisen eine Steuerschrägenlänge auf, wobei durch die Steuerschrägenlänge ein Drehwinkel, um den das drehbare Teil und ggfls. ein an dem drehbaren Teil angeordneter Betätigungsflügel gedreht werden können, bestimmt wird. Bevorzugt wird ein Drehwinkel von 90°. Durch Verlängerung oder Verkürzung der Steuerschräge(n) sind aber auch andere Drehwinkel des drehbaren Teils und ggfls. des an dem drehbaren Teil angeordneter Betätigungsflügels realisierbar.

Nach einer vorteilhaften Ausgestaltung des erfindungsgemäßen Verbindungselementes ist die Drehrichtung des drehbaren Teiles durch einen Anschlag oder durch zwei Anschläge begrenzt.

Nach einer zusätzlichen vorteilhaften Ausgestaltung des erfindungsgemäßen Verbindungselementes wird durch Drehung des drehbaren Teiles in die eine Drehrichtung der Verriegelungsstift aus der Verriegelungsposition in die Entriegelungsposition (Freigabeposition) und durch Drehung des drehbaren Teiles in die andere Drehrichtung der Verriegelungsstift aus der Entriegelungsposition in die Verriegelungsposition verbracht.

Nach einer zusätzlichen vorteilhaften Ausgestaltung des erfindungsgemäßen Verbindungselementes ist die Bewegung des Verriegelungsstiftes zwischen den Positionen axial zur Längsachse des Verriegelungsstiftes ausgerichtet.

Nach einer zusätzlichen vorteilhaften Ausgestaltung des erfindungsgemäßen Verbindungselementes ist die Bewegung des Verriegelungsstiftes zwischen den Positionen eine Verschiebung des Verriegelungsstiftes und/oder eine Drehung des Verriegelungsstiftes.

Nach einer zusätzlichen vorteilhaften Ausgestaltung des erfindungsgemäßen Verbindungselementes sind der Verriegelungsstift und/oder das drehbare Teil zumindest teilweise in oder an einem Führungselement angeordnet. Bevorzugt sind hierbei der Verriegelungsstift zumindest teilweise von dem Führungselement umgeben und/oder das drehbare Teil zumindest teilweise von dem Führungselement umgeben oder das drehbare Teil umgibt zumindest teilweise das Führungselement.

Nach einer diesbezüglichen vorteilhaften Ausgestaltung des erfindungsgemäßen Verbindungselementes weist das Führungselement mindestens zwei miteinander verbindbare Führungselementteile auf. Bevorzugt werden die beiden Führungselementteile mittels Laserschweißen miteinander verbunden.

Nach einer zusätzlichen vorteilhaften Ausgestaltung des erfindungsgemäßen Verbindungselementes ist in dem Führungselement eine Feder angeordnet.

Nach einer diesbezüglichen vorteilhaften Ausgestaltung des erfindungsgemäßen Verbindungselementes ist die Feder eine Druckfeder, deren Federkraft auf den Verriegelungsstift wirkt, wodurch der Verriegelungsstift bevorzugt durch die Feder (Rückstellfeder) in Richtung der Entriegelungsposition gedrückt wird. Bevorzugt ist die Druckfeder zwischen dem Führungselement und dem Verriegelungsstift angeordnet.

Nach einer diesbezüglichen vorteilhaften Ausgestaltung des erfindungsgemäßen Verbindungselementes weist das Verbindungselement eine Sicherungsvorrichtung auf, die ein Rastmechanismus ist, wodurch der Verriegelungsstift in der Verriegelungsposition und/oder der Entriegelungsposition verrastet.

Denkbar ist hierbei, dass durch Drehung des drehbaren Teiles der Verriegelungsstift von einer Position in die andere Position verbracht wird, wobei das drehbare Teil und der Verriegelungsstift miteinander verzahnt sind und das Führungselement verschieden tiefe und verschieden lange Nuten, in die der Verriegelungsstift verrastet werden kann, aufweist, so dass ein durch die Bewegung des Verriegelungsstiftes verursachtes Zusammendrücken der Feder, die durch ihren Druck in Richtung der Entriegelungsposition eine waagrechte Kraftkomponente bewirkt, der Verriegelungsstift im richtigen Moment verdreht wird und in die nächste Nut einrast. Da die Nuten zwei unterschiedliche Längen aufweisen, befindet sich der Verriegelungsstift, wenn er in der kürzeren Nut einrastet, in der Verriegelungsposition und, wenn er in der längeren Nut einrastet, in der Entriegelungsposition.

Denkbar wäre auch, dass das drehbare Teil einen Nocken aufweist, der in eine an dem Verriegelungsstift angeordnete spiralförmige Vorschubbahn eingreift, wodurch durch Verdrehen des drehbaren Teils der Verriegelungsstift gedreht wird. Die Vorschubbahn weist zwei Enden auf, so dass sich der Verriegelungsstift beim Erreichen des einen Endes in der Verriegelungsposition und beim Erreichen des anderen Endes in der Entriegelungsposition befindet. Bevorzugt ist jeweils an den Enden der Vorschubbahn eine Vertiefung angeordnet, in die der Nocken, der bevorzugt eine abgerundete Oberfläche aufweist, bei Erreichen der Position einrastet. Um den Einrastvorgang zu erleichtern, kann das jeweilige Ende der Vorschubbahn und/oder der Nocken federnd ausgestaltet sein. Denkbar wäre auch, dass der Verriegelungsstift einen Nocken aufweist, der in eine an dem drehbaren Teil angeordnete spiralförmige Vorschubbahn eingreift, wodurch durch Verdrehen des drehbaren Teils der Verriegelungsstift gedreht wird.

Nach einer zusätzlichen vorteilhaften Ausgestaltung des erfindungsgemäßen Verbindungselementes ist das drehbare Teil an dem herausnehmbaren Zahnersatz angeordnet.

Nach einer vorteilhaften Ausgestaltung des erfindungsgemäßen Verfahrens zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, wobei ein Verbindungselement eingesetzt wird, das einen eine Längsachse aufweisenden Verriegelungsstift und ein Aufnahmeelement zur zumindest teilweisen Aufnahme des Verriegelungsstiftes aufweist, wobei der Verriegelungsstift zwischen zwei Positionen, nämlich zwischen einer Verriegelungsposition, in der er sich zumindest teilweise in dem Aufnahmeelement befindet, und einer Entriegelungsposition, in der er sich außerhalb des Aufnahmeelementes befindet, hin und her bewegbar ist, und wobei das Verbindungselement ein drehbares Teil aufweist, das eine oder zwei mit dem Verriegelungsstift zusammenwirkende Steuerschräge(n) aufweist und das in einer oder in zwei Drehrichtungen um die Längsachse des Verriegelungsstiftes drehbar ist, aufweist, so dass durch Drehung des drehbaren Teiles der Verriegelungsstift zwischen den beiden Positionen bewegt wird, wird zum Erreichen der jeweils anderen Position des Verriegelungsstiftes das drehbare Teil um einen Drehwinkel, der zwischen 45° und 180° liegt, gedreht. Bevorzugt wird das drehbare Teil um 90° gedreht.

Nach einer zusätzlichen vorteilhaften Ausgestaltung des erfindungsgemäßen Verfahrens wird der Verriegelungsstift in der Verriegelungsposition und/oder in der Entriegelungsposition durch eine Sicherungsvorrichtung gehalten.

Nach einer zusätzlichen vorteilhaften Ausgestaltung des erfindungsgemäßen Verfahrens wird als Verbindungselement ein Verbindungselement gemäß einem der Ansprüche 1 bis 11 eingesetzt.

Weitere Vorteile und vorteilhafte Ausgestaltungen der Erfindung sind der nachfolgenden Beschreibung, den Ansprüchen und der Zeichnungen entnehmbar.

### Zeichnungen

Bevorzugte Ausführungsbeispiele des erfindungsgemäßen Gegenstands sind in der Zeichnung dargestellt und werden im Folgenden näher erläutert. Es zeigen
- Fig. 1: eine Explosionszeichnung eines ersten Ausführungsbeispiels eines erfindungsgemäßen Verbindungselementes,
- Fig. 2: eine Ansicht des erfindungsgemäßen Verbindungselementes, gemäß Fig. 1, in seiner Entriegelungsposition,
- Fig. 3: eine Ansicht des erfindungsgemäßen Verbindungselementes, gemäß Fig. 1, in seiner Verriegelungsposition,
- Fig. 4: eine Ansicht eines Kiefers, bei dem ein lösbarer Zahnersatz mittels erfindungsgemäßer Verbindungselemente an einem festsitzenden Zahnersatz angeordnet ist,
- Fig. 5: eine Detailansicht aus Fig. 4 und
- Fig. 6: eine Detailansicht aus Fig. 5, wobei der lösbare Zahnersatz von dem festsitzenden Zahnersatz gelöst ist, und
- Fig. 7: eine Explosionszeichnung eines zweiten Ausführungsbei-spiels des erfindungsgemäßen Verbindungselementes.

### Beschreibung des Ausführungsbeispiels

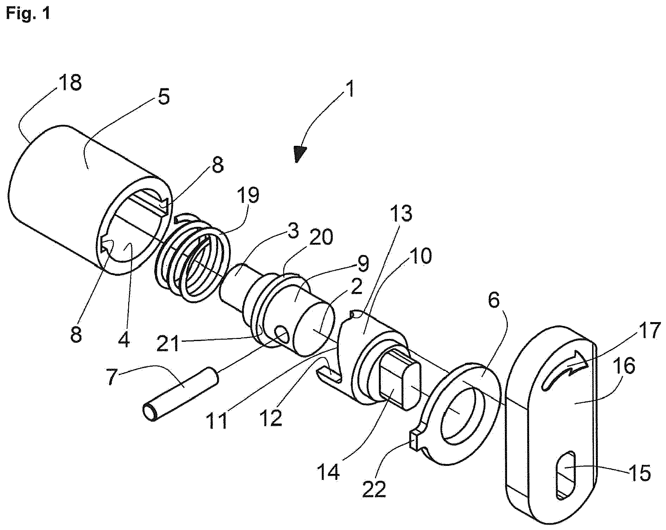

Fig. 1 zeigt eine Explosionszeichnung eines ersten Ausführungsbeispiels eines erfindungsgemäßen Verbindungselementes 1. Das erfindungsgemäße Verbindungselement 1 weist einen eine Längsachse 2 aufweisenden Verriegelungsstift 3 auf, wobei der Verriegelungsstift 3 (Vorschubstift) in einem Führungselement, das aus zwei Führungselementteilen, nämlich einem eine Innenseite 4 aufweisenden Gehäuse 5 und einem Gehäusedeckel 6, der fest oder lösbar an dem Gehäuse 5 angeordnet ist, besteht, zwischen zwei Positionen, nämlich zwischen einer Verriegelungsposition, in der er sich in Wirkverbindung mit einem nicht dargestellten Aufnahmeelement, das beispielsweise eine Bohrung im festsitzenden Zahnersatz sein kann, wobei die Bohrung z.B. einen runden oder ovalen Querschnitt aufweisen kann, befindet, und einer Entriegelungsposition (Freigabeposition), in der er sich nicht in Wirkverbindung mit dem nicht dargestellten Aufnahmeelement befindet, axial zur Längsachse 2 des Verriegelungsstiftes 3 hin und her bewegbar ist. Um bei diesem Ausführungsbeispiel eine Rotation des Verriegelungsstiftes 3 um seine Längsachse 2 innerhalb des Führungselementes zu vermeiden, weist der Verriegelungsstift 3 einen durch den Kopf 9 hindurchragenden Führungsstift 7 auf, der in zwei sich gegenüberliegenden an der Innenseite 4 des Gehäuses 5 angeordneten Nuten 8 geführt wird. Denkbar ist auch, dass zwei Führungsstifte eingesetzt werden, die in den Kopf 9 eingesteckt sind und die jeweils in einer der sich gegenüberliegenden an der Innenseite 4 des Gehäuses 5 angeordneten Nuten 8 geführt werden. Die Bewegung des Verriegelunsstiftes 3, der einen Kopf 9 aufweist, erfolgt durch ein um die Längsachse 2 des Verriegelungsstiftes 3 drehbares Teil 10 (Druckhülse), in das der Kopf 9 im zusammengebauten Zustand des erfindungsgemäßen Verbindungselementes 1 zumindest teilweise aufgenommen wird. An dem drehbaren Teil 10 sind zwei sich gegenüberliegende Steuerschrägen 11, wobei in der Fig. 1 nur eine Steuerschräge 11 sichtbar ist, an deren einem Ende sich jeweils ein die Drehung begrenzender Anschlag 12 und an deren anderen Ende sich jeweils ein die Drehung begrenzende Einkerbung 13 befindet, angeordnet, die in Wirkverbindung mit dem Führungsstift 7 stehen.

Das drehbare Teil 10 ragt mit einem Zapfen 14 durch den Gehäusedeckel 6 in eine Zapfenaufnahme 15 des Betätigungsflügels 16, so dass ein Betätigungsflügel 16 durch eine Zapfenverbindung beispielsweise durch Verschweißen oder Verkleben fest fixiert an dem drehbaren Teil 10 angeordnet werden kann. Denkbar ist auch, dass der Betätigungsflügel 16 gleichzeitig der Gehäusedeckel ist. Auf dem Betätigungsflügel 16 ist ein Pfeil 17 angeordnet, der in Richtung der Entriegelungsposition, die durch Zusammenbau der in der Explosionszeichnung dargestellten Bauteile bereits erreicht ist, weist. Durch Drehung des Betätigungsflügels 16 entgegen der durch den Pfeil 17 angegebenen Richtung, also in Richtung der Verriegelungsposition, dreht sich das drehbare Teil 10 entgegen dem Uhrzeigersinn, wobei durch die Drehung der Verriegelungsstift 3 bewegt wird, da der Führungsstift 7, der in der Entriegelungsposition am Anschlag 12 anliegt, aufgrund der Steuerschräge 11 innerhalb der an der Innenseite 4 des einen Gehäuseboden 18 aufweisenden Gehäuses 5 angeordneten Nuten 8 vom Gehäusedeckel 6 in Richtung des Gehäusebodens 17 bewegt wird. Dabei wird eine Feder 19 gespannt, die sich einerseits am Gehäuseboden 18 und andererseits an einem an dem Verriegelungsstift 3 angeordneten Bund 20, an welchem die Feder 19 zwischen dem Gehäuseboden 18 und dem Verriegelungsstift 3 ein Gegenlager findet, abstützt. Beim Erreichen der Verriegelungsposition drückt die Feder 19 den Führungsstift 7 in die Einkerbung 13, wodurch der Verriegelungsstift 3 sicher in der Verriegelungsposition verrastet.

Denkbar ist auch, dass mindestens eine Steuerschräge 11 an beiden Enden einen Anschlag 12 und/oder an mindestens einem Ende eine Einkerbung 13 aufweist. Denkbar ist außerdem, dass nur eine Steuerschräge 11 an dem drehbaren Teil 10 vorhanden ist, an deren einem Ende sich jeweils ein die Drehung begrenzender Anschlag 12 und an deren anderen Ende sich jeweils ein die Drehung begrenzende Einkerbung 13 befindet. Damit eine durch die Federbelastung verursachte Verkippung des drehbaren Teils 10 vermieden wird, ist der Bund 20 nicht, wie in der Fig. 1 gezeigt, mit einer parallel zum Gehäusdeckel ausgerichteten Fläche 21 ausgestattet, sondern weist der Bund 20 auf der dem in dieser Ausführung nur in den Kopf 9 eingesteckten Führungsstift 7 abgewandten Seite eine von der Entriegelungsposition in die Verriegelungsposition gerichtete Steigung auf.

Bevorzugt ist an der an der Außenseite des Gehäuses 5 unterhalb des Betätigungsflügels 16 eine kleine Erhebung 22 angebracht, welche den Befestigungsverbund des eingeklebten erfindungsgemäßen Verbindungselementes 1 im herausnehmbaren Zahnersatz, gegen die Rotationskräfte bei Freigabe des Betätigungsmechanismus durch Bewegen des Betätigungsflügels 16 schützt.

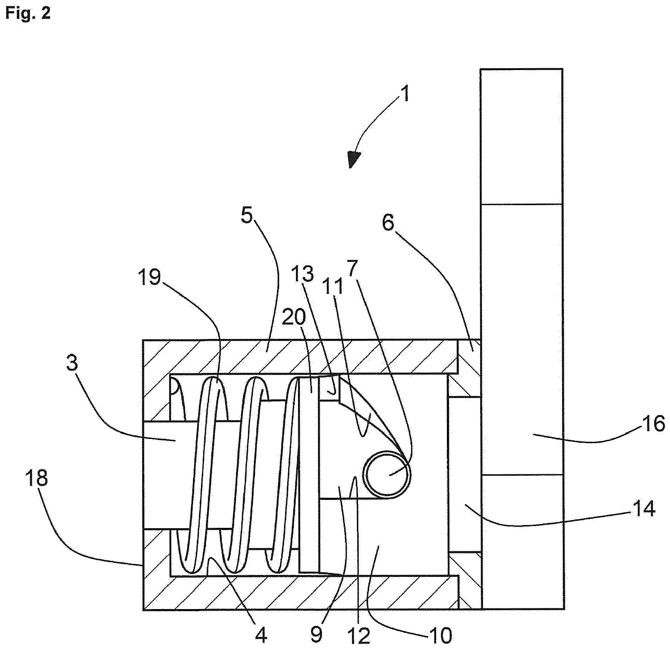

Fig. 2 zeigt eine Ansicht des erfindungsgemäßen Verbindungselementes 1, gemäß Fig. 1, in seiner Entriegelungsposition, wobei das Gehäuse 5 und der Gehäusedeckel 6 zur Verdeutlichung geschnitten dargestellt sind. In der Entriegelungsposition ist der Verriegelungsstift 3 außerhalb der nicht dargestellten Ausnehmung (z.B. einer am festsitzenden Zahnersatz angelegten Aufnahmebohrung) aber bevorzugt bündig innerhalb des Gehäusebodens 18. Bevorzugt ist das Gehäuse 5 an seiner Außenseite rauh gefertigt, damit eine retentive Oberfläche zur Einklebung in den herausnehmbaren Teil des Zahnersatzes erreicht ist.

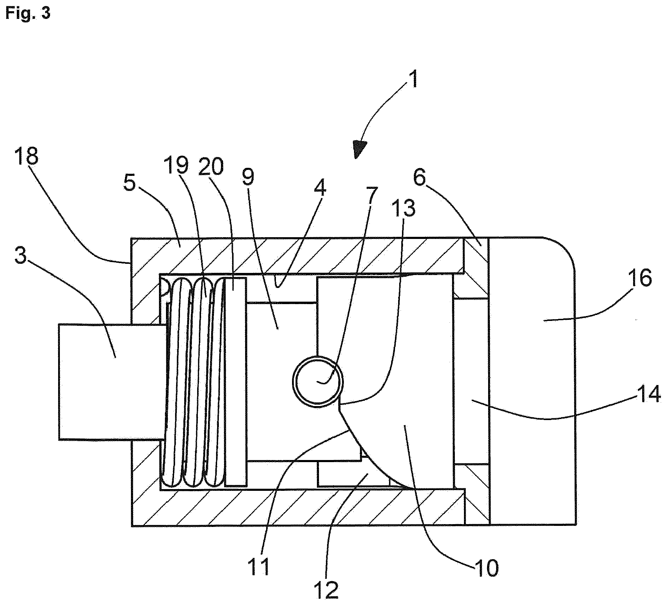

Fig. 3 zeigt eine Ansicht des erfindungsgemäßen Verbindungselementes 1, gemäß Fig. 1, in seiner Verriegelungsposition, wobei das Gehäuse 5 und der Gehäusedeckel 6 zur Verdeutlichung geschnitten dargestellt sind. In der Verriegelungsposition ragt der Verriegelungsstift 3 aus dem Gehäuseboden 18 heraus, wodurch er in eine entsprechende Ausnehmung im festsitzenden Zahnersatz, die in der Zeichnung aber nicht dargestellt ist, verriegelnd eingreifen kann.

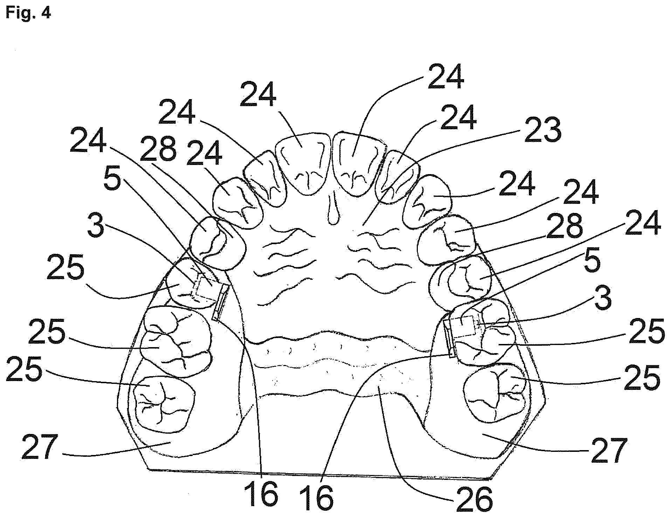

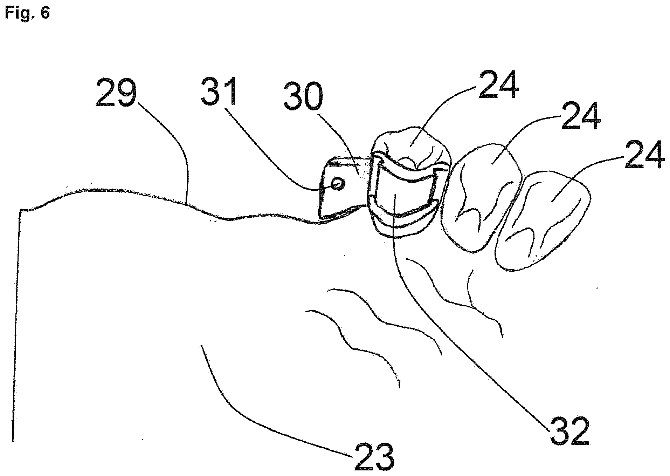

Fig. 4 zeigt eine Ansicht eines Kiefers 23 (Oberkiefer), bei dem ein lösbarer Zahnersatz mittels erfindungsgemäßer Verbindungselemente an einem festsitzenden Zahnersatz, z.B. Metallkeramikkronen 24 angeordnet ist. Dabei weist der lösbare Zahnersatz Prothesenzähne 25, die auf miteinander über einen Gaumenbügel 26 verbundenen Prothesensätteln 27 angeordnet sind, und Schubverteilungsarme 28 auf, als passendes Gegenstück zu in Fig. 6 gezeigten gefrästen Lagern 32 zur besseren Verbindung des herausnehmbaren Zahnersatzes mit dem festsitzenden Zahnersatz.

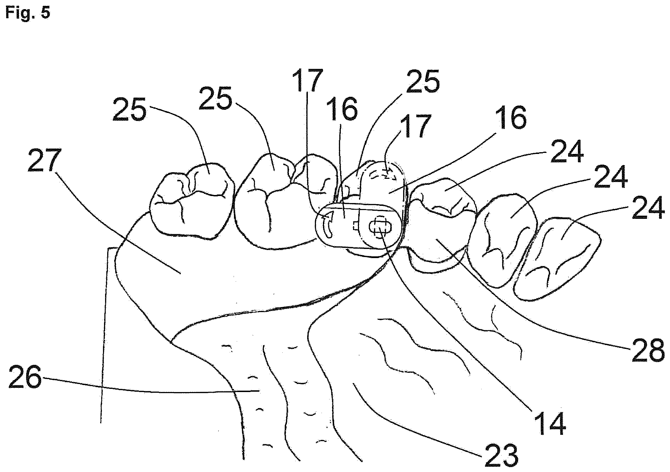

Fig. 5 zeigt eine Detailansicht aus Fig. 4. Durch die Fig. 5 wird deutlich, dass der Betätigungsflügel 16 in Richtung des Pfeiles 17 zwischen den beiden Positionen, nämlich der Entriegelungsposition, die in Fig. 5 strich-punktiert dargestellt ist und in der der Betätigungsflügel 16 senkrecht steht, und der Verriegelungsposition, in der der Betätigungsflügel 16 waagerecht steht, um einen 90°-Winkel, der einen bevorzugten Drehwinkel darstellt, gedreht (geschwenkt) wird. Um den Einbau des erfindungsgemäßen Verbindungselementes 1 an jeder Position innerhalb der Ober-und Unterkieferzähnen zu gewährleisten, gibt es das erfindungsgemäßen Verbindungselement 1 bevorzugt in zwei Varianten deren Betätigungsmechanismus in zwei unterschiedlichen Richtungen funktioniert, nämlich z.B. die Verriegelungs- zur Entriegelungsposition von der 3 - 12 Uhr-Position, sowie die Verriegelungs- zur Entriegelungsposition von der 9 - 12 Uhr-Position. Durch Verlängerung oder Verkürzung der Steuerschräge 11 sind aber auch andere Drehwinkel des Betätigungsflügel 16 realisierbar.

Fig. 6 zeigt eine Detailansicht aus Fig. 5, wobei der lösbare Zahnersatz von dem festsitzenden Zahnersatz gelöst ist, wodurch der zahnlose Kiefer 29 bzw. ein zahnloser Kieferabschnitt freiliegt. Hierbei wird deutlich, dass an der dem lösbaren Zahnersatz zugewandten Seite des festsitzenden Zahnersatzes ein angeformtes Element 30 (z.B. extracoronales Geschiebe) angeordnet ist, welches eine Aufnahmebohrung 31 (Aufnahmeelement) aufweist, in welche ein Verriegelungsstift des erfindungsgemäßen Verbindungselementes zur Fixierung des lösbaren Zahnersatzes zumindest teilweise aufgenommen werden kann. Des Weiteren ist der festsitzende Zahnersatz mit einem gefrästen Lager 32 ausgestattet, das zur Aufnahme eines Schubverteilungsarmes dient.

Bevorzugt ist das die innenliegende Funktionsvorrichtung beherbergende geschlossene Gehäuse 5 zylindrisch ausgestaltet, so dass dadurch die Möglichkeit gegeben ist, dass es auch in bestehenden Zahnersatz, also im herausnehmbaren Teil des Zahnersatzes, mittels einer Bohrung nachträglich eingearbeitet werden kann. Unter der Vorraussetzung, dass der herausnehmbare Zahnersatz innerhalb der Horizontalebene durch den festsitzenden Zahnersatz geführt ist, genügt das Anlegen einer runden Vertiefung zur Aufnahme des Verriegelungsstiftes an einer Zahnkrone oder einem Implantatabutment oder ein an die Zahnkrone oder das Zahnimplantat angeformtes Element oder eines Stegbarrens. Ein weiteres zur Riegelvorrichtung gehöriges Bauteil zur Anbringung an den festsitzenden Zahnersatz ist somit nicht notwendig. Somit eignet sich das erfindungsgemäße Verbindungselement 1 bevorzugt zur Befestigung abnehmbarer Zahnprothesen an Zahnkronen oder Zahnimplantaten mit einem Verriegelungsstift 3, der in eine in die Zahnkrone oder das Implantatabutment oder ein an die Zahnkrone oder das Zahnimplantat angeformtes Element 30 eingebrachte runde Vertiefung (Aufnahmebohrung 31) einführbar und durch einen 90°-Schwenk eines Betätigungsflügels 16 gegen die Kraft einer Feder 19 wieder aus der Vertiefung (Aufnahmebohrung 31) entfernbar ist, wobei ein in einem geschlossenen runden Gehäuse 5 befindlicher, federnd gelagerter Mechanismus durch einen rechtwinklig zur Achsrichtung des Verriegelungsstiftes 3 angeordneter Betätigungsflügel 16 den Verriegelundsstift 3 in seine Verriegelungs,- oder Entriegelungsposition bewegt.

Durch ein Erweitern der runden Vertiefung (Aufnahmebohrung 31), zur Aufnahme des Verriegelungsstiftes, in basaler Richtung, kann der herausnehmbare Zahnersatz unter Kaulast mit der Nachgiebigkeit der Mundschleimhaut mitgehen und wird durch die Verriegelung nicht blockiert. Dies ist besonders bei Deckprothesen von Vorteil.

Das erfindungsgemäße Verbindungselement 1 hat den Vorteil, dass es, obwohl es mit wenigen Bauteilen so klein gehalten ist, dass eine Integration in Prothesen möglich ist, ohne eine Überdimensionierung in diesen Bereichen zu verursachen, von Patienten mit geringer Feinmotorik oder auch deren Pflegekräften leicht bedienbar ist. Durch die Funktionsweise ergibt sich vorteilhaft, dass eine Abnutzung der Funktionsflächen möglichst gering ist. Zudem kann das erfindungsgemäße Verbindungselement 1 auch in bestehenden herausnehmbaren Zahnersatz, also nachträglich, wenn der Halt des herausnehmbaren Zahnersatzes nicht mehr gegeben ist, auf möglichst einfache Art, eingearbeitet werden.

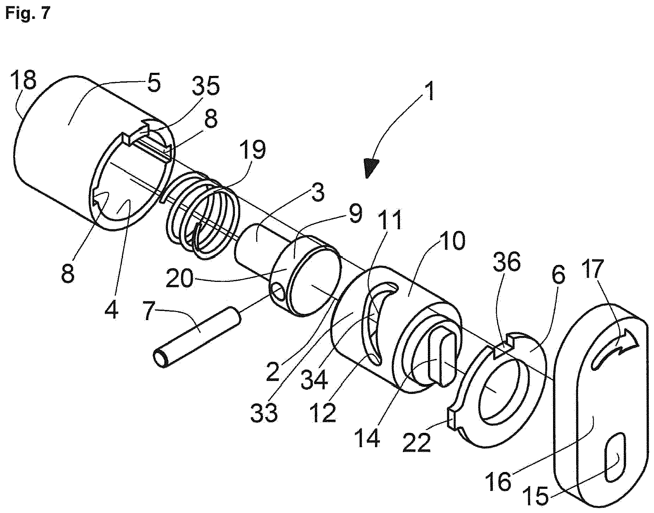

Fig. 7 zeigt eine Explosionszeichnung eines zweiten Ausführungsbeispiels eines erfindungsgemäßen Verbindungselementes 1. Die Funktionsweise des im zweiten Ausführungsbeispiel gezeigten erfindungsgemäßen Verbindungselementes 1 entspricht prinzipiell der Funktionsweise des im ersten Ausführungsbeispiel gezeigten erfindungsgemäßen Verbindungselementes 1. Das zweite Ausführungsbeispiel hat aber insbesondere den Vorteil, dass das drehbare Teil 10 eine geschlossene Mitnehmerhülse ist, da es unterhalb der Steuerschräge 11 geschlossen ausgestaltet ist, wodurch das drehbare Teil 10 einen Bereich 33 und mindestens eine eine Steuerschräge 11 aufweisende Öffnung 34, bevorzugt zwei sich gegenüberliegende Öffnungen 34, die jeweils eine Steuerschräge 11 aufweisen, wobei in der Fig. 7 nur eine Öffnung 34 sichtbar ist, aufweist. Denkbar ist auch, dass mindestens eine Steuerschräge 11 an mindestens einem Ende eine wie in Fig. 1 gezeigte Einkerbung 13 aufweist. Da der Führungsstift 7 oder, wie zu Fig. 1 dargelegt, die Führungsstifte 7 im zusammengebauten Zustand des erfindungsgemäßen Verbindungselementes 1 durch die Öffnungen 34 hindurchragen, ist eine Drehung des Verriegelungsstiftes 3 selbst dann möglich, wenn die Feder 19 z.B. durch einen Bruch derart defekt sein sollte, dass eine sonst vorhandene Spannung, die durch Abstützung der Feder 19 am Gehäuseboden 18 und an dem Kopf 9 befindlichen Bund 20 des Verriegelungsstiftes 3 gegeben ist, verloren geht. Somit bietet das zweite Ausführungsbeispiel des erfindungsgemäßen Verbindungselementes 1 die Sicherheit, dass der Verriegelungsstiftes 3 auch bei defekter Feder 19 bewegbar ist und insbesondere auch bei defekter Feder 19 aus der Verriegelungsposition in die Entriegelungsposition bewegt werden kann.

Selbstverständlich könnten das in Fig. 7 gezeigte drehbare Teil 10, der in Fig. 7 gezeigte Verriegelungsstift 3 und/oder das in Fig. 7 gezeigte Gehäuse 5, das eine Erhebung 35 aufweist, die mit einer an dem Gehäusedeckel 6 angeordneten Nut 36 zusammenwirkt, um den Gehäusedeckel 6 positionsgenau an dem Gehäuse 5 anzuordnen, nebst dem in Fig. 7 gezeigten Gehäusedeckel 6 auch bei dem in Fig. 1 gezeigten Ausführungsbeispiel zum Einsatz kommen. Ebenso könnten der in Fig. 1 gezeigte Verriegelungsstift 3 und/oder das in Fig. 1 gezeigte Gehäuse 5 nebst dem in Fig. 1 gezeigten Gehäusedeckel 6 auch bei dem in Fig. 7 gezeigten Ausführungsbeispiel Verwendung finden.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Verbindungselement
- 2: Längsachse
- 3: Verriegelungsstift
- 4: Innenseite
- 5: Gehäuse
- 6: Gehäusedeckel
- 7: Führungsstift
- 8: Nut
- 9: Kopf
- 10: Drehbares Teil
- 11: Steuerschräge
- 12: Anschlag
- 13: Einkerbung
- 14: Zapfen
- 15: Zapfenaufnahme
- 16: Betätigungsflügel
- 17: Pfeil
- 18: Gehäuseboden
- 19: Feder
- 20: Bund
- 21: Fläche
- 22: Erhebung
- 23: Kiefer
- 24: Metallkeramikkrone
- 25: Prothesenzahn
- 26: Gaumenbügel
- 27: Prothesensattel
- 28: Schubverteilungsarm
- 29: Zahnloser Kiefer
- 30: Angeformtes Element
- 31: Aufnahmebohrung
- 32: Gefrästes Lager
- 33: Bereich
- 34: Öffnung
- 35: Erhebung
- 36: Nut

## Patentansprüche

1. Verbindungselement (1) zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten,
- mit einem eine Längsachse (2) aufweisenden Verriegelungsstift (3), der in Wirkverbindung mit einem an dem festsitzenden Zahnersatz angeordneten Aufnahmeelement, das den Verriegelungsstift (3) zumindest teilweise aufnehmen kann, bringbar ist,
wobei der Verriegelungsstift (3) zwischen zwei Positionen, nämlich zwischen einer Verriegelungsposition, in der er sich in Wirkverbindung mit dem Aufnahmeelement befindet, und einer Entriegelungsposition, in der er sich nicht in Wirkverbindung mit dem Aufnahmeelement befindet, hin und her bewegbar ist, **dadurch gekennzeichnet,**
**dass** das Verbindungselement (1) ein drehbares Teil (10), das in einer oder in zwei Drehrichtungen um die Längsachse (2) des Verriegelungsstiftes (3) drehbar ist, aufweist, durch dessen Drehung der Verriegelungsstift (3) zwischen den beiden Positionen hin und her bewegbar ist, wobei das drehbare Teil (10) eine mit dem Verriegelungsstift (3) zusammenwirkende Steuerschräge (11) oder das drehbare Teil (10) zwei mit dem Verriegelungsstift (3) zusammenwirkende Steuerschrägen (11) aufweist.

2. Verbindungselement (1), nach Anspruch 1,
**dadurch gekennzeichnet,**
**dass** die Drehrichtung des drehbaren Teiles (10) durch einen Anschlag (12) oder durch zwei Anschläge (12) begrenzt ist.

3. Verbindungselement (1), nach Anspruch 1 oder Anspruch 2,
**dadurch gekennzeichnet,**
**dass** durch Drehung des drehbaren Teiles (10) in die eine Drehrichtung der Verriegelungsstift (3) aus der Verriegelungsposition in die Entriegelungsposition und durch Drehung des drehbaren Teiles (10) in die andere Drehrichtung der Verriegelungsstift (3) aus der Entriegelungsposition in die Verriegelungsposition verbracht wird.

4. Verbindungselement (1), nach einem der vorhergehenden Ansprüche,
**dadurch gekennzeichnet,**
**dass** die Bewegung des Verriegelungsstiftes (3) zwischen den Positionen axial zur Längsachse (2) des Verriegelungsstiftes (3) ausgerichtet ist.

5. Verbindungselement (1), nach einem der vorhergehenden Ansprüche,
**dadurch gekennzeichnet,**
**dass** die Bewegung des Verriegelungsstiftes (3) zwischen den Positionen eine Verschiebung des Verriegelungsstiftes (3) und/oder eine Drehung des Verriegelungsstiftes (3) ist.

6. Verbindungselement (1), nach einem der vorhergehenden Ansprüche,
**dadurch gekennzeichnet,**
**dass** der Verriegelungsstift (3) und/oder das drehbare Teil (10) zumindest teilweise in oder an einem Führungselement angeordnet sind.

7. Verbindungselement (1), nach Anspruch 6,
**dadurch gekennzeichnet,**
**dass** das Führungselement mindestens zwei miteinander verbindbare Führungselementteile aufweist.

8. Verbindungselement (1), nach Anspruch 6 oder Anspruch 7,
**dadurch gekennzeichnet,**
**dass** in dem Führungselement eine Feder (19) angeordnet ist.

9. Verbindungselement (1), nach Anspruch 8,
**dadurch gekennzeichnet,**
**dass** die Feder (19) eine Druckfeder ist, deren Federkraft auf den Verriegelungsstift (3) wirkt.

10. Verbindungselement (1), nach einem der vorhergehenden Ansprüche,
**dadurch gekennzeichnet,**
**dass** das Verbindungselement (1) eine Sicherungsvorrichtung aufweist, die ein Rastmechanismus ist.

11. Verbindungselement (1), nach einem der vorhergehenden Ansprüche,
**dadurch gekennzeichnet,**
**dass** das drehbare Teil (10) an dem herausnehmbaren Zahnersatz angeordnet ist.

12. Verfahren zur lösbaren Befestigung eines herausnehmbaren Zahnersatzes an einem festsitzenden Zahnersatz, wie Zahnkronen, Teleskopkronen und Stegen, auf natürlichen Zähnen oder Zahnimplantaten, wobei ein Verbindungselement (1) eingesetzt wird, das einen eine Längsachse (2) aufweisenden Verriegelungsstift (3) aufweist, der in Wirkverbindung mit einem an dem festsitzenden Zahnersatz angeordneten Aufnahmeelement, das den Verriegelungsstift (3) zumindest teilweise aufnehmen kann, bringbar ist, wobei der Verriegelungsstift (3) zwischen zwei Positionen, nämlich zwischen einer Verriegelungsposition, in der er sich zumindest teilweise in dem Aufnahmeelement befindet, und einer Entriegelungsposition, in der er sich außerhalb des Aufnahmeelementes befindet, hin und her bewegbar ist,
**dadurch gekennzeichnet,**
**dass** das Verbindungselement (1) ein drehbares Teil (10) aufweist, das eine oder zwei mit dem Verriegelungsstift (3) zusammenwirkende Steuerschräge(n) (11) aufweist, wobei das drehbares Teil (10) in einer oder in zwei Drehrichtungen um die Längsachse (2) des Verriegelungsstiftes (3) drehbar ist, so dass durch Drehung des drehbaren Teiles (10) der Verriegelungsstift (3) zwischen den beiden Positionen bewegt wird.

13. Verfahren, nach Anspruch 12,
**dadurch gekennzeichnet,**
**dass** zum Erreichen der jeweils anderen Position des Verriegelungsstiftes (3) das drehbare Teil (10) um einen Drehwinkel, der zwischen 45° und 180° liegt, gedreht wird.

14. Verfahren, nach Anspruch 12 oder Anspruch 13,
**dadurch gekennzeichnet,**
**dass** der Verriegelungsstift (3) in der Verriegelungsposition und/oder in der Entriegelungsposition durch eine Sicherungsvorrichtung gehalten wird.

15. Verfahren, nach einem der Ansprüche 12 bis 14,
**dadurch gekennzeichnet,**
**dass** als Verbindungselement (1) ein Verbindungselement (1) gemäß einem der Ansprüche 1 bis 11 eingesetzt wird.
